# FASCICULE DE BREVET EUROPEEN

(11) **EP 0 777 434 B1**
(45) Date de publication et mention de la délivrance du brevet: **02.12.1998**
(21) Numéro de dépôt: 95928529.7
(22) Date de dépôt: 22.08.1995
(51) Int. Cl.: A47J 37/12, H01H 3/16

(54) **SECURITE ELECTRIQUE POUR APPAREIL DE CHAUFFE POUR ALIMENTS**
ELEKTRISCHES SICHERHEITS-SYSTEM FUER LEBENSMITTEL-KOCHGERAET
ELECTRICAL SAFETY DEVICE FOR FOOD HEATING APPLIANCE

(30) Priorité: 22.08.1994 FR 9410588
(43) Date de publication de la demande: 11.06.1997
(73) Titulaire: SEB S.A., 69130 Ecully (FR)
(72) Inventeur: BIZARD, Jean-Claude, F-21121 Fontaine-les-Dijon (FR); BEUGNOT, Bernard, F-21120 Is-sur-Tille (FR); THEVENIN, Jean-Marie, F-21610 Bourberain (FR)
(86) Numéro de dépôt international: FR9501103
(87) Numéro de publication internationale: WO9605761

(56) Documents cités:
- EP-A- 0 546 208
- CH-A- 598 794
- DE-A- 3 619 762
- DE-A- 4 012 075
- PATENT ABSTRACTS OF JAPAN vol. 014 no. 056 (M-0929) ,31 Janvier 1990 & JP,A,01 281329 (HITACHI HEATING APPLIANCE CO LTD) 13 Novembre 1989,

## Description

### DOMAINE TECHNIQUE

La présente invention se rapporte au domaine technique général des appareils de chauffe ou de cuisson d'aliments conçus pour la réalisation de fritures dans un bain d'huile en particulier.

La présente invention concerne un appareil de chauffe pour aliments, en particulier pour la réalisation de fritures dans un bain d'huile, comprenant une cuve montée par exemple de manière amovible dans un bâti, ainsi que des moyens de chauffe disposés sous la cuve, lesquels sont associés à des moyens de régulation thermique et à des moyens de détection de présence et de remplissage de la cuve.

La présente invention concerne plus particulièrement mais non exclusivement une friteuse électrique destinée à la cuisson d'aliments tels que des frites, de la viande ou des poissons, et comportant des moyens de détection de présence et/ou de remplissage de la cuve.

### TECHNIQUE ANTERIEURE

Les moyens de détection de présence et/ou de remplissage selon un seuil minimal d 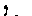 une cuve d 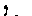 un récipient de cuisson tel une friteuse sont déjà connus. Le plus souvent, de tels moyens permettent d 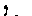 asservir les moyens de chauffe de façon à ce que ces derniers ne puissent pas être activés dans certains cas prédéterminés. Par exemple, on souhaite éviter que l 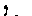 élément chauffant soit activé lorsque la cuve est retirée ou lorsque celle-ci est insuffisamment remplie. Dans ces deux cas, il s 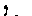 agit d 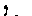 assurer la sécurité de l 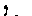 utilisateur et d 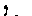 éviter tout dommage qui pourrait être causé à l 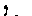 appareil. Pour réaliser cet asservissement, les dispositifs de type connus utilisent par exemple un moyen d 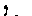 actionnement associé à un ressort, alignés avec un interrupteur. La présence de la cuve et/ou son poids entraînent un déplacement du moyen d'actionnement. L 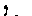 interrupteur est ainsi actionné.

Le document CH 598 794 décrit de tels moyens, dans ce cas disposés à même le support de la cuve. Le dispositif ne comprend par ailleurs pas de couvercle et les moyens de chauffe sont prévus dans le bain d 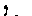 huile.

Le document DE-A- 40 12 075 décrit une friteuse électrique comportant une cuve amovible chauffée par au moins un élément chauffant disposé sous cette dernière. La cuisson se déroule en enceinte fermée grâce à la présence d 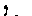 un couvercle. La friteuse comprend par ailleurs des moyens de surveillance coopérant avec la cuve.

Cependant, de tels dispositifs comportent certaines limitations qui font que leur utilisation sur certains types d 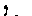 appareils de cuisson est impossible si on souhaite réaliser un appareil offrant une garantie optimale de sécurité à l 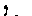 utilisateur.

En outre, dans le cas où la friteuse comporte un joint d 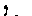 étanchéité à l 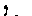 interface du couvercle et du bâti, ainsi que des moyens permettant de comprimer le dit joint entre le couvercle et la cuve lors de la fermeture pour obtenir une enceinte de cuisson étanche au niveau du bord périphérique de la cuve, une fermeture du couvercle avec compression du joint serait susceptible d 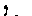 entraîner l 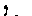 actionnement du moyen d 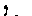 actionnement. Ainsi, dans le cas où un tel organe serait utilisé comme seul moyen d 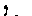 actionnement de l 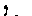 interrupteur, comme c 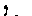 est le cas avec les dispositifs de type connu, on connaîtrait des situations où le circuit d 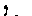 alimentation électrique serait fermé dès la fermeture du couvercle, et ce malgré l 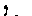 absence de cuve ou encore avec une cuve vide ou insuffisamment remplie. Une telle situation dangereuse peut être évité grâce à la présente invention.

### EXPOSE DE L'INVENTION

Selon l 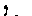 invention, il est donc prévu un second moyen d 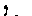 actionnement, qui a pour effet qu 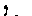 un actionnement du premier moyen pour cause accidentelle ou due à la compression du joint d 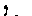 étanchéité du couvercle, qui, lors de la fermeture appuie contre le premier moyen, demeure sans effet sur l 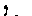 actionnement de l 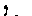 interrupteur. En effet, dans un tel cas, la fermeture du couvercle entraîne le déplacement du second organe d 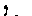 actionnement, actionné par exemple par un rehaussement ou un plot prévu sur le couvercle. Ce second organe inhibe alors l 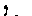 action dû premier organe d 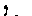 actionnement et le circuit d 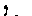 alimentation électrique demeure ouvert, évitant ainsi d 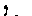 enclencher le chauffage alors que la cuve a été retirée pour nettoyage, ou encore lorsque celle-ci n 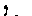 est pas suffisamment remplie.

Par ailleurs, le dispositif selon la présente invention est compact, peu coûteux, simple et très fiable, ce qui est impératif compte tenu du rôle du dispositif en regard de la sécurité de l 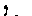 utilisateur.

L'objet assigné à l'invention vise à réaliser un appareil de chauffe dont l'alimentation électrique est automatiquement coupée lorsque la cuve n'est pas suffisamment remplie, de manière à éviter un fonctionnement à vide de l'appareil.

L'objet assigné à l'invention vise également à réaliser un appareil de chauffe comprenant une cuve amovible et dont l'alimentation électrique est automatiquement coupée lorsque la cuve n'est pas présente dans le bâti de l'appareil.

Un autre objet de l'invention vise à fournir un appareil de chauffe présentant une grande sécurité de fonctionnement, notamment à l'égard de surchauffes dues à un chauffage à vide ou à tout risque lié à l'absence ou à la faible quantité de cofacteur de cuisson.

La sécurité de fonctionnement doit également être comprise comme une sécurité à l'égard d'une utilisation négligente d'un appareil conforme à l'invention, consistant par exemple à utiliser une cuve autre que la cuve d'origine dans le bâti.

Un objet supplémentaire de l'invention vise à réaliser de manière simple et peu coûteuse, un appareil de chauffe assurant une grande sécurité de fonctionnement.

Les objets assignés à l'invention sont atteints à l'aide d 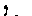 un appareil de cuisson comprenant un bâti dans lequel sont intégrés une cuve, destinée à la cuisson d'aliments, des moyens de chauffe, en relation thermique avec la cuve, des moyens de détection, aptes d 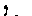 une part à détecter si la cuve est sensiblement vide et dans ce cas à ouvrir le circuit d'alimentation électrique des moyens de chauffe, et d 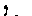 autre part à détecter si la cuve est remplie de manière à atteindre un poids minimum préétabli, pour dans ce cas fermer le circuit d'alimentation électrique des moyens de chauffe, caractérisé en ce que la cuve est amovible et en ce que les moyens de détection comprennent un premier organe d 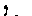 actionnement actionné par la cuve lorsque cette dernière est en place dans le bâti, et un deuxième organe d 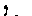 actionnement actionné par le couvercle de l'appareil lorsque le couvercle se referme sur la cuve, ledit deuxième organe d 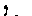 actionnement étant susceptible d 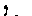 agir de façon à inhiber l 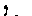 action du premier organe d 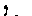 actionnement lorsque la cuve n'est pas en place dans le bâti ou lorsque la cuve n'a pas atteint le poids minimum prédéterminé

### DESCRIPTION SOMMAIRE DES DESSINS

D'autres objets et avantages de l'invention apparaîtront plus en détail à la lecture de la description qui suit, en référence aux dessins annexés, donnés à titre d'exemples illustratifs et non limitatifs dans lesquels :
- La figure 1 représente une vue partielle et en perspective d'un exemple de montage des moyens de détection dans un appareil conforme à l'invention,
- Les figures 2a à 2d représentent les différentes positions des moyens de détection de l'appareil conforme à l'invention.
- la figure 2e représente une vue en coupe des moyens de détection agencés dans l'appareil conforme à l'invention.
- La figure 3 représente une variante de réalisation des moyens de détection de l'appareil conforme à l'invention.
- La figure 4 représente une vue en coupe d'une variante de réalisation des moyens de détection de l'appareil conforme à l'invention.
- La figure 5 représente une vue en coupe d'un exemple de montage des moyens de détection dans un appareil conforme à l'invention lorsque le couvercle est refermé.

### MEILLEURE MANIERE DE REALISER L'INVENTION

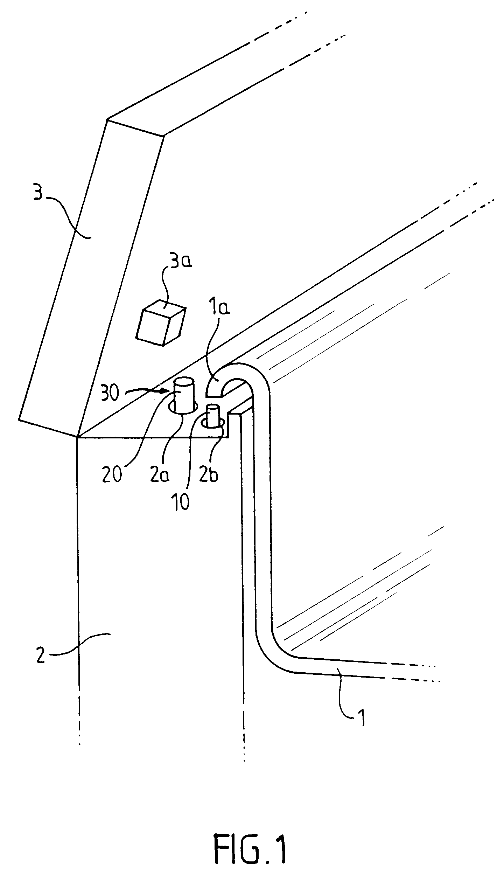

La figure 1 représente une vue partielle et en perspective d'un exemple de montage de moyens de détection 30 dans une friteuse, cette dernière comportant une cuve 1 agencée dans un bâti 2.

La cuve 1 présente un bord périphérique roulé 1a dans sa partie supérieure lui permettant d'agir sur les moyens de détection 30.

La cuve 1, destinée à recevoir des aliments pour la cuisson, ou le cofacteur de cuisson, présente donc le bord périphérique roulé 1a lui permettant de reposer au moins en partie sur le bâti 2.

La friteuse comporte également des moyens de chauffe en relation thermique avec la cuve 1 au moins lorsque ladite friteuse est en fonctionnement.

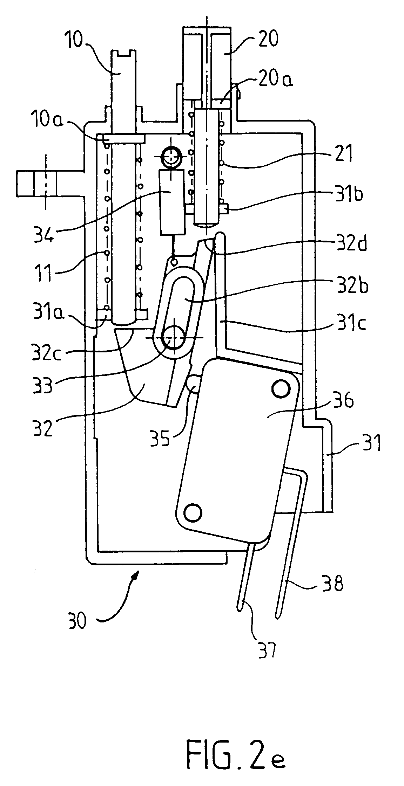

Les moyens de détection 30, représentés notamment à la figure 2e, sont aptes à fermer ou à ouvrir le circuit d'alimentation électrique des moyens de chauffe lorsque la cuve 1 amovible est respectivement présente ou absente dans le bâti 2. Les moyens de détection 30 sont également aptes, lorsque la cuve 1 amovible est présente, d'une part à détecter si la cuve 1 amovible est vide; dans un tel cas, le circuit d'alimentation électrique est ouvert, ou d'autre part à détecter si la cuve 1 amovible est remplie de manière à atteindre un poids minimum préétabli; dans un tel cas, le circuit d'alimentation électrique des moyens de chauffe est fermé.

Avantageusement les moyens de détection 30 sont agencés dans un boîtier 31 comportant deux faces principales sensiblement parallèles, entre lesquelles se trouvent les éléments constituants des moyens 30. Le boîtier 31 est par ailleurs agencé dans le bâti 2. Les moyens de détection 30 comprennent au moins un moyen d 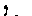 actionnement ou organe de transmission 10 actionné par la cuve 1 lorsque cette dernière est en place dans le bâti 2, un basculeur 32 mobile entre une position de rappel en contact avec l'organe de transmission 10 et au moins une position de travail dans laquelle ledit basculeur 32, actionné par l'organe de transmission 10, appuie sur un bouton 35 d'un interrupteur 36 du circuit d'alimentation électrique des moyens de chauffe.

L'interrupteur 36 présente des connexions électriques 37, 38 dépassant du boîtier 31 pour être connectées au circuit d'alimentation électrique des moyens de chauffe.

Avantageusement, les moyens de détection 30 comprennent un deuxième organe d 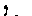 actionnement ou de transmission 20 actionné par un couvercle 3 de l'appareil lorsque le couvercle 3 se referme sur la cuve 1. Le deuxième organe de transmission 20 agit également sur le basculeur 32 pour inhiber l'action du premier organe de transmission 10 lorsque la cuve 1 n'est pas en place dans le bâti 2, ou lorsque la cuve 1 n'a pas atteint le poids minimum prédéterminé.

Avantageusement, les organes d'actionnement 10, 20 sont constitués de tiges rigides faisant saillie hors du boîtier 31 par l'une de leurs extrémités. Ces organes d'actionnement 10, 20 sont mobiles par translation et sont guidés par des moyens de guidage 31a, 31b, pouvant être constitués par exemple de tiges disposées de part et d 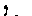 autre de l 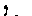 axe de translation des organes 10 et 20 de façon à ce que ceux-ci puissent coulisser librement. Dans l 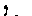 exemple d 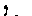 exécution illustré, ces moyens font partie du corps du boîtier 31. Les organes d'actionnement 10, 20 se déplacent entre une position de travail agissant sur le basculeur 32 et une position de repos avec un rebord 10a, 20a en appui contre la partie interne du boîtier 31. Dans cette deuxième position, le basculeur 32 n'est pas actionné. En l'absence d'une action ou d'une force exercée sur l'extrémité des organes d'actionnement 10, 20, faisant saillie hors du boîtier 31, lesdits organes d'actionnement 10, 20, sont maintenus dans leur position de repos par l'intermédiaire de moyens de rappel élastiques 11, 21 comme par exemple des ressorts en compression. Ces derniers, sont calés par exemple entre les moyens de guidage 31a, 31b et les rebords 10a, 20a des organes de transmission 10, 20, permettant de bloquer lesdits organes de transmission 10, 20 contre le boîtier 31 dans leur position de repos.

Le basculeur 32, représenté à la figure 2e, est une pièce mécanique, présentant d'une part une gorge de guidage 32b, traversée par un axe 33 fixe et d'autre part deux bras d'appui 32d, 32c répartis autour de l'axe 33 pour venir en regard respectivement des organes de transmission 20, 10, de manière à être actionnés respectivement par les organes de transmission 20, 10. L 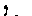 axe 33, perpendiculaire aux axes des organes 10 et 20 est avantageusement prévu dans le prolongement de ces axes, entre ceux-ci, de façon à relier les deux faces principales du boîtier 31. L'axe 33 est donc avantageusement solidaire du boîtier 31 et autorise le basculeur 32 à se mouvoir soit par translation selon la direction de la gorge de guidage 32b, soit par rotation autour de l'axe 33, soit par une combinaison de ces deux mouvements. En outre, le basculeur 32 est maintenu dans sa position de rappel par l'intermédiaire d'un organe de rappel 34, comme par exemple un ressort en tension, lorsqu'aucun des organes de transmission 10, 20 n'est actionné. La position de rappel du basculeur 32 correspond sensiblement aux positions de repos des organes de transmission 10 et 20.

L'organe de rappel 34 est avantageusement fixé sur ledit basculeur 32, par exemple à une extrémité externe de la gorge 32b, et sur le boîtier 31, par exemple près de la paroi du boîtier, entre les organes 10 et 20, par tout moyen connu.

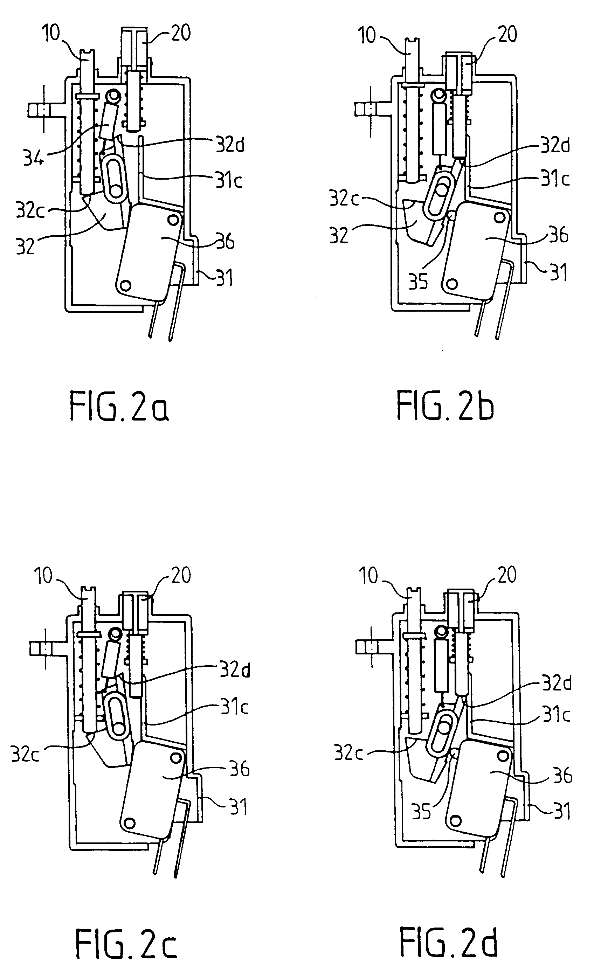

Le mouvement de translation du basculeur est à la fois guidé par la gorge de guidage 32b et par un moyen tel une nervure 31c, solidaire d 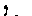 une des faces du boîtier 31, et orientée de façon sensiblement parallèle à l 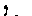 axe de l 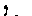 organe de transmission 20. La nervure 31c permet notamment au basculeur 32 et plus précisément au bras d'appui 32d, d'être aligné sensiblement selon l 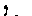 axe de déplacement de l 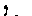 organe 20, à proximité immédiate ou encore en contact avec celui-ci, tant que le premier organe de transmission 10 n'agit pas sur le basculeur 32. En revanche, le basculeur 32 est animé d'un mouvement de rotation autour de l'axe 33 pour appuyer sur le bouton 35 commandant l'ouverture et la fermeture du circuit d'alimentation des moyens de chauffe lorsque le premier organe de transmission 10 est actionné. Ce n'est que le basculement ou le pivotement du basculeur 32 qui permet d'appuyer sur le bouton 35. Ainsi, lorsque le deuxième organe de transmission 20 est actionné, c'est-à-dire qu'il appuie sur le bras d'appui 32d du basculeur 32, ce dernier est déplacé par translation, et en particulier le bras d'appui 32c est déplacé vers le bas, d'une distance suffisante pour empêcher tout contact dudit bras d'appui 32c avec le premier organe de transmission 10, empêchant ainsi un pivotement du basculeur 32 lorsque ledit premier organe de transmission 10 est actionné après le deuxième organe de transmission 20 (figure 2d).

En outre, lorsque le premier organe de transmission 10 est actionné, de manière à faire basculer le basculeur 32, le bras d'appui 32d bascule dans une position telle que ledit bras d'appui 32d n'est plus en regard avec le deuxième organe de transmission 20 (figures 2a et 2c). Une telle situation correspond à une mise en route des moyens de chauffe par l'intermédiaire du bouton 35 et de l'interrupteur 36 lesquels sont actionnés par le basculeur 32 indépendamment de la position du deuxième organe de transmission 20 et par conséquent du couvercle 3. L'appareil conforme à l'invention est donc susceptible d'être utilisé avec le couvercle 3 refermé ou ouvert pour une cuisson à l'air libre. Une telle cuisson suppose évidemment que le premier organe de transmission 10 soit actionné ce qui correspond à la présence de la cuve 1 dans le bâti 2 lorsque cette dernière est amovible et/ou au remplissage suffisant de ladite cuve 1 pour présenter un poids minimum prédéterminé. Ce poids minimum prédéterminé est obtenu aisément à l'aide du moyen de rappel élastique 11, par exemple un ressort, présentant une constante de raideur bien définie et par conséquent un tarage déterminé. Le choix d'un tel moyen de rappel élastique 11 autorise un déplacement par translation du premier organe de transmission 10 suffisant pour faire pivoter le basculeur 32 lorsque la cuve 1 est présente dans le bâti 2 et lorsqu'elle est remplie suffisamment de préférence par une quantité minimale donnée de produit à friture. Ainsi, le tarage du moyen de rappel élastique 11, correspond par exemple à la quantité d'huile minimale présente dans la cuve 1. Le poids de la cuve 1 remplie permet donc d'actionner le bouton 35. Une telle conception permet d'éviter un fonctionnement à vide de l'appareil conforme à l'invention et en particulier d'une friteuse. De manière préférentielle, les moyens de détection 30 sont au moins partiellement logés dans le boîtier 31, solidaire du bâti 2 de manière à présenter les extrémités des organes de transmission 10, 20 faisant saillie hors du boîtier 31 pour venir en contact avec respectivement la cuve 1 et le couvercle 3. Par ailleurs, la cuve 1 présente le bord périphérique roulé 1a dans sa partie supérieure pour permettre à ladite cuve 1 de reposer sur le bâti 2 et au moins partiellement sur le premier organe de transmission 10.

Avantageusement, le couvercle 3 présente un rehaussement 3a supplémentaire solidaire du couvercle 3 pour venir en appui sur le deuxième organe de transmission 20 lorsque le couvercle 3 est refermé sur la cuve 1.

Avantageusement, le deuxième organe de transmission 20 présente une course suffisante pour déplacer le basculeur 32 selon la direction de la gorge de guidage 32b pour éviter tout contact entre le bras d'appui 32c et le premier organe de transmission 10 lorsque la cuve 1 est vide ou lorsque la cuve 1 est absente du bâti 2 (figures 2b et 2d).
Une telle conception est particulièrement intéressante dans la mesure où les appareils du type friteuse présentent en général au moins un joint d'étanchéité 60 à l'interface du couvercle 3 et du bâti 2, ainsi que des moyens permettant de comprimer le dit joint entre le couvercle 3 et la cuve 1 lors de la fermeture pour obtenir une enceinte de cuisson étanche au niveau du bord périphérique roulé 1a de la cuve 1. Une fermeture du couvercle 3 avec compression du dit joint serait susceptible de déplacer le premier organe de transmission 10.

Ainsi, dans le cas où un tel organe serait utilisé comme seul moyen d 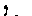 actionnement de l 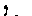 interrupteur, comme c 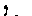 est le cas avec les dispositifs de type connu, on connaîtrait des situations où le circuit d 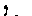 alimentation électrique serait fermé dès la fermeture du couvercle, et ce malgré l 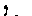 absence de cuve ou encore avec une cuve vide ou insuffisamment remplie. Une telle situation dangereuse peut être évité grâce à la présente invention.

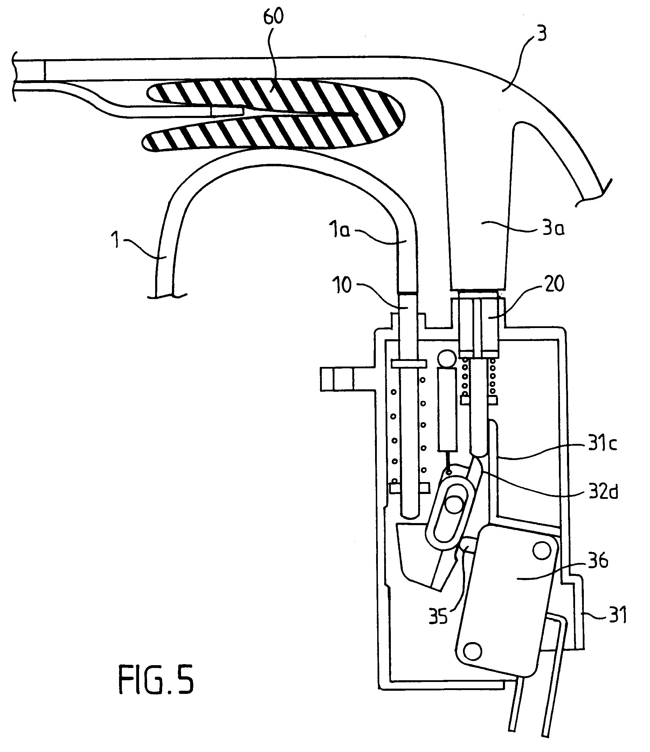

Selon l 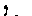 invention, il est donc prévu un second moyen d 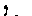 actionnement 20, qui a pour effet qu 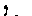 un actionnement du premier moyen 10 pour cause accidentelle ou due à la compression du joint d'étanchéité 60 du couvercle, qui, lors de sa fermeture appuie contre le premier moyen 10, demeure sans effet sur l 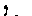 actionnement de l 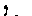 interrupteur. En effet, dans un tel cas, la fermeture du couvercle entraîne le déplacement du second organe d 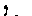 actionnement, actionné par exemple par un rehaussement 3a ou un plot prévu sur le couvercle. Ce second organe inhibe alors l 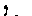 action du premier organe d 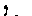 actionnement et le circuit d 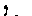 alimentation électrique demeure ouvert, évitant ainsi d 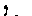 enclencher le chauffage alors que la cuve a été retirée pour nettoyage, ou encore lorsque celle-ci n 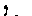 est pas suffisamment remplie (fig 5).

En effet, le déplacement de l 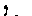 organe de transmission 10 est sans effet sur le basculeur 32 dès que ce dernier se retrouve dans sa position basse, c'est-à-dire sa position de travail, laquelle est obtenue par le déplacement du deuxième organe de transmission 20 appuyant sur le bras d'appui 32d, ledit deuxième organe de transmission 20 étant actionné par le rehaussement 3a. Une telle situation est représentée à la figure 2d. Toute alimentation électrique des moyens de chauffe est donc impossible si la cuve 1 n'a pas atteint son poids prédéterminé.

Selon une variante de réalisation de l'appareil conforme à l'invention, le couvercle 3 est amovible de manière à réaliser un appareil de cuisson à l'air libre. L'appareil est constitué par exemple d'une friteuse.

Selon une autre variante de réalisation de l'appareil conforme à l'invention, la cuve 1 est solidaire du bâti 2 en présentant cependant une mobilité vis à vis du bâti 2 suffisante pour actionner le premier organe de transmission 10.

Le bâti 2 présente en outre des ouvertures 2a et 2b lesquelles sont traversées respectivement par les extrémités des organes de transmission 20, 10.

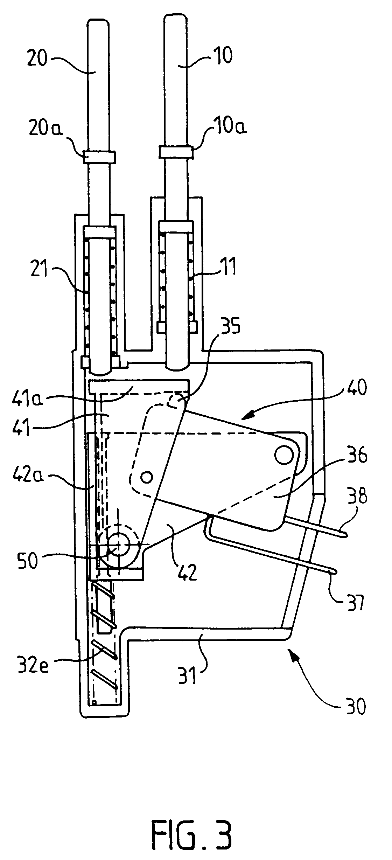

Selon une variante de réalisation de l'appareil conforme à l'invention représentée à la figure 3, les moyens de détection 30 comprennent un mécanisme de commutation 40 composé d'au moins trois pièces distinctes mobiles les unes par rapport aux autres. Le mécanisme de commutation 40 est constitué d'un élément d'appui 41 venant en regard des organes de transmission 10, 20, d'un chariot 42 supportant l'élément d'appui 41 et mobile par translation selon la direction de déplacement des organes de transmission 10, 20, ainsi que de l'interrupteur 36 monté sur le chariot 42. L'élément d'appui 41 présente également dans sa partie supérieure un bord d'appui 41a venant en contact avec le bouton 35 de l'interrupteur 36.

L'élément d'appui 41 est monté en rotation sur le chariot 42. Ainsi, un pivotement ou un basculement de l'élément d'appui 41, permet d'actionner le bouton 35. L'élément d'appui 41 est susceptible de pivoter par rapport au chariot 42 par l'intermédiaire d'un axe de pivotement 50, disposé sensiblement dans le prolongement du deuxième organe de transmission 20 de manière à empêcher tout pivotement de l'élément d'appui 41 lorsque le deuxième organe de transmission 20 exerce une force sur ledit élément d'appui 41. A cet effet, il peut être prévu un bord latéral 42a sur le chariot 42 de manière à constituer une butée pour l'élément d'appui 41. La zone d'appui du deuxième organe de transmission 20 peut alors être décalée davantage par rapport à l'axe de pivotement 50, de manière à ce que l'élément d'appui 41 subisse une force de basculement appliquée sur l'élément d'appui 41. La rotation de ce dernier est empêchée par le bord latéral 42a. Ainsi, lorsque le deuxième organe de transmission 20 est actionné, il exerce une pression sur l'élément d'appui 41 qui lui-même entraîne le chariot 42 vers le bas en comprimant un ressort de compression 32e. Le faible décalage de la direction du déplacement du deuxième organe de transmission 20 par rapport à l'axe de rotation 50, ainsi que la présence d'un bord latéral 42a faisant office de butée sur le chariot 42 empêche tout pivotement de l'élément d'appui 41 lorsque le deuxième organe de transmission 20 est actionné. L'ensemble constituant le mécanisme de commutation 40 est donc déplacé vers le bas sans exercer de pression sur le bouton 35 de l'interrupteur 36. Une telle situation correspond par exemple à la fermeture du couvercle 3 de la friteuse conforme à l'invention en l'absence de cuve 1 dans le bâti 2 ou en présence d'une cuve 1 vide ou insuffisamment remplie. En revanche, lorsque le premier organe de transmission 10 est actionné, celui-ci exerce une force sur l'élément d'appui 41 dans une zone décalée par rapport à l'axe de pivotement 50 et située du côté opposé au bord latéral 42a. La pression exercée sur l'élément d'appui 41 provoque donc son pivotement ainsi que l'actionnement du bouton 35 de l'interrupteur 36. L'élément d'appui 41 ne se trouve donc pas en butée contre le bord latéral 42a. Le pivotement de l'élément d'appui 41 permet également de dégager la trajectoire du deuxième organe de transmission 20 et par conséquent de fermer le couvercle 3 de la friteuse sans interrompre la connexion électrique obtenue par l'actionnement du bouton 35.

Avantageusement, le tarage du moyen de rappel élastique 11 est effectué de manière à éviter un actionnement du bouton 35 lorsque uniquement la cuve 1 appuie sur le premier organe de transmission 10 par l'intermédiaire de son poids à vide. Lorsque la cuve 1 vide est placée dans le bâti 2 et lorsque l'utilisateur referme le couvercle 3 sur la cuve 1, le déplacement du deuxième organe de transmission 20, et par conséquent des moyens de commutation 40, empêche tout actionnement du bouton 35 et donc la mise en route des moyens de chauffe.

Les dimensions et les courses maximales et minimales des organes de transmission 10, 20, ainsi que les dimensions du mécanisme de commutation 40 ou du basculeur 32 sont aisément déterminables par expérimentation.

Le fonctionnement des moyens de détection conformes à l'invention est le suivant.

Lorsque l'utilisateur referme le couvercle 3 sur le bâti 2 de la friteuse en l'absence de la cuve 1, (figure 2b), les moyens de chauffe ne sont pas susceptibles d'être alimentés électriquement.

Ceci est obtenu par l'intermédiaire du deuxième organe de transmission 20.

Lorsque l'utilisateur met en place la cuve 1 dans le bâti, et lorsque ladite cuve 1 est vide, ou présente un poids inférieur à une valeur minimale prédéterminée, (figure 2d), le déplacement du premier organe de transmission 10 n'est pas suffisant pour actionner le bouton 35 de l'interrupteur 36. Les moyens de chauffe ne sont donc pas alimentés électriquement, indépendamment de l'ouverture ou de la fermeture du couvercle 3. Lorsque l'utilisateur remplit la cuve 1 d 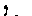 huile de cuisson ou d'aliments, de manière à ce que ladite cuve 1 présente un poids supérieur à la valeur prédéterminée, le premier organe de transmission 10 exerce une pression sur le bouton 35 qui permet ainsi aux moyens de chauffe d'être alimentés électriquement, et ceci indépendamment de l'ouverture ou de la fermeture du couvercle 3 (figures 2a et 2c).

Les moyens de détection conformes à la présente invention sont particulièrement adaptés, mais non exclusivement, à être utilisés dans des friteuses comportant d'une part une cuve 1 amovible et d'autre part une contre-cuve enveloppant la cuve 1 amovible et des moyens de chauffe agencés dans le fond de la contre-cuve.

Ainsi, la figure 2a correspond à une friteuse comportant une cuve 1 pleine avec son couvercle 3 ouvert, tandis que la figure 2c correspond au cas où le couvercle 3 est refermé sur la cuve 1 de la même friteuse.

La figure 2b correspond au cas où le couvercle 3 est refermé sur le bâti 2 en l'absence de la cuve 1, et la figure 2d correspond au cas où le couvercle 3 se trouve refermé sur le bâti 2, muni de sa cuve 1, laquelle est vide ou insuffisamment remplie.

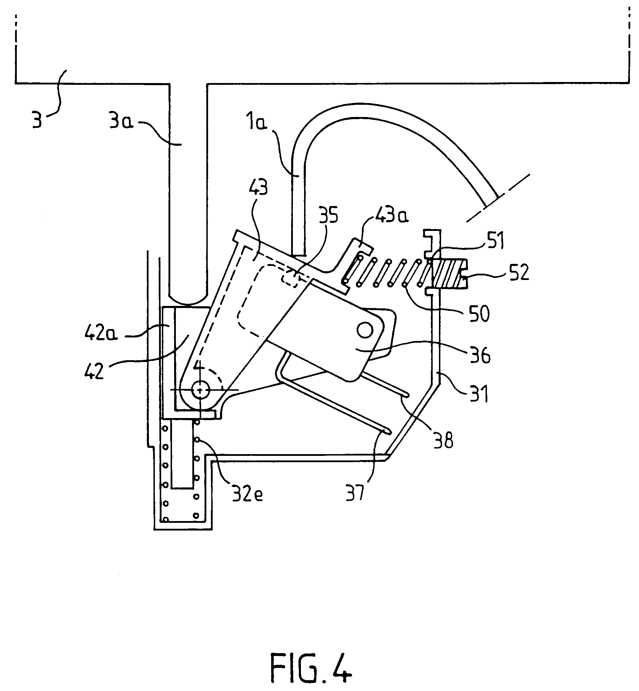

Selon une autre variante de réalisation de l'appareil conforme à l'invention, représentée par exemple à la figure 4, les moyens de détection 30 comprennent un chariot 42 associé à un ressort de rappel 32e, ledit chariot 42 étant d'une part déplacé au moins en translation par le couvercle 3 de l'appareil dès que ledit couvercle 3 appuie sur le chariot 42 pour empêcher un moyen de contact d'alimenter les moyens de chauffe lorsque la cuve 1 est absente ou lorsque la cuve 1 a atteint un poids inférieur au poids minimum préétabli.

Le moyen de contact comprend une pièce d'appui 43 montée mobile en rotation sur le chariot 42 et actionnée par le bord périphérique roulé 1a lorsque ladite cuve 1 est présente dans le bâti 2 et a atteint le poids minimum préétabli.

Ainsi, lorsque la cuve 1 est absente ou n'a pas atteint le poids minimum préétabli pour faire basculer la pièce d'appui 43, le rehaussement 3a appuie sur la pièce d'appui 43 de manière à déplacer le chariot 42 par translation, empêchant ainsi tout actionnement du bouton 35. Une éventuelle compression du couvercle 3 sur la cuve 1 lors de la fermeture n'est pas davantage en mesure d'actionner le bouton 35 lorsque le chariot 42 est déplacé vers le bas.

En outre, la pièce d'appui 43 est associée à un ressort de tarage 50 fixé sur une paroi 43a de la pièce d'appui 43, et sur le boîtier 31 contenant les moyens de détection 30, de manière à ramener la pièce d'appui 43 dans une position ouvrant l'interrupteur 36 du circuit d'alimentation des moyens de chauffe lorsque la cuve 1 est soit absente, soit présente dans le bâti avec un poids inférieur au poids minimum préétabli.

Avantageusement, le ressort de tarage 50 est monté sur le boîtier 31, par l'intermédiaire d'un orifice 51 ménagé dans ledit boîtier 31 et d'un moyen de réglage 52 de la tension du ressort de tarage 50.

Selon d'autres variantes de réalisation de l'appareil conforme à l'invention, non représentées aux figures, les moyens de détection 30 sont constitués par exemple d'un interrupteur à bille permettant d'établir ou de couper un contact électrique lorsqu'il n'est pas en position verticale.

Un tel interrupteur peut, de manière connue, être monté dans le boîtier 31.

Les moyens de détection 30 peuvent également être constitués de moyens optiques ou magnétiques permettant de déterminer la position de la cuve 1 dans le bâti 2 et par conséquent de déterminer son degré de remplissage. Avantageusement, ces moyens de détection 30 peuvent être associés à un microprocesseur destiné à piloter les moyens de chauffe.

Un avantage d'un appareil comportant des moyens de détection conforme à l'invention réside dans l'utilisation de moyens mécaniques simples lorsque la cuve 1 est amovible ou fixe.

Un autre avantage de l'appareil conforme à l'invention résulte des moyens de détection qui constituent des moyens de sécurité de fonctionnement dudit appareil.

### POSSIBILITES D'APPLICATION INDUSTRIELLE

L'invention trouve son application industrielle dans la fabrication d'appareils de cuisson d'aliments par immersion dans un bain d'huile, et en particulier dans la fabrication de friteuses électriques.

## Revendications

1. Appareil de cuisson comprenant un bâti (2) dans lequel sont intégrés une cuve (1), destinée à la cuisson d'aliments, des moyens de chauffe, en relation thermique avec la cuve (1), des moyens de détection (30), aptes d 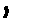 une part à détecter si la cuve (1) est sensiblement vide et dans ce cas à ouvrir le circuit d'alimentation électrique des moyens de chauffe, et d 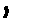 autre part à détecter si la cuve (1) est remplie de manière à atteindre un poids minimum préétabli, pour dans ce cas fermer le circuit d'alimentation électrique des moyens de chauffe, caractérisé en ce que la cuve (1) est amovible et en ce que les moyens de détection (30) comprennent un premier organe d 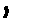 actionnement (10; 43) actionné par la cuve (1) lorsque cette dernière est en place dans le bâti (2), et un deuxième organe d 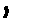 actionnement (20; 42) actionné par le couvercle (3) de l'appareil lorsque le couvercle (3) se referme sur la cuve (1), ledit deuxième organe d 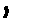 actionnement (20; 42) étant susceptible d'agir de façon à inhiber l 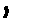 action du premier organe d 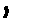 actionnement (10; 43) lorsque la cuve (1) n'est pas en place dans le bâti (2) ou lorsque la cuve (1) n'a pas atteint le poids minimum prédéterminé.

2. Appareil selon la revendication 1, dans lequel les moyens de détection (30) comprennent un basculeur (32) mobile entre une position de rappel en contact avec l'organe de transmission (10) et au moins une position de travail dans laquelle ledit basculeur (32) actionné par l'organe d 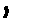 actionnement (10) appuie sur un bouton (35) d'un interrupteur (36) du circuit d'alimentation électrique des moyens de chauffe.

3. Appareil selon la revendication 2, dans lequel le basculeur (32) est une pièce mécanique présentant d'une part une gorge de guidage (32b) traversée par un axe (33) fixe et d'autre part deux bras d'appui (32d, 32c) répartis autour de l'axe (33) pour venir en regard respectivement des organes d 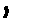 actionnement (20, 10) de manière à être actionné par les organes d 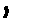 actionnement (20, 10).

4. Appareil selon la revendication 3, dans lequel le basculeur (32) est animé d'un mouvement de translation guidé par la gorge de guidage (32b) lorsque le deuxième organe d 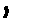 actionnement (20) est actionné, le basculeur (32) étant animé d'un mouvement de rotation autour de l'axe (33) pour appuyer sur le bouton (35) lequel commande l'ouverture et la fermeture du circuit d'alimentation électrique des moyens de chauffe, lorsque le premier organe d 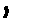 actionnement (10) est actionné.

5. Appareil selon l'une des revendications 2 à 4, dans lequel le basculeur (32) est maintenu dans sa position de rappel par l'intermédiaire d'un organe de rappel (34) lorsqu'aucun des organes d 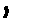 actionnement (10, 20) n'est actionné.

6. Appareil selon l'une des revendications précédentes, dans lequel les moyens de détection (30) sont au moins partiellement logés dans un boîtier (31) solidaire du bâti (2) de manière à présenter des extrémités des organes d 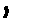 actionnement (10, 20) faisant saillie hors du boîtier (31) pour venir en contact avec respectivement la cuve (1) et le couvercle (3).

7. Appareil selon la revendication 1, dans lequel les moyens de détection (30) comprennent un chariot (42) associé à un ressort de rappel (32e), ledit chariot (42) étant d'une part déplacé au moins en translation par le couvercle (3) de l'appareil dès que ledit couvercle (3) appuie sur le chariot (42) pour empêcher un moyen de contact d'alimenter les moyens de chauffe lorsque la cuve (1) est absente ou lorsque la cuve (1) a atteint un poids inférieur au poids minimum préétabli.

8. Appareil selon la revendication 7 caractérisé en ce que le moyen de contact comprend une pièce d'appui (43) montée mobile en rotation sur le chariot (42) et actionnée par la cuve (1) lorsque ladite cuve (1) est présente dans le bâti (2) et a atteint le poids minimum préétabli.

9. Appareil selon la revendication 8 caractérisé en ce que la pièce d'appui (43) est associée à un ressort de tarage (50) fixé sur une paroi (43a) de l'élément d'appui (41), et sur le boîtier (31) contenant les moyens de détection (30), de manière à ramener la pièce d'appui (43) dans une position ouvrant l'interrupteur (36) du circuit d'alimentation des moyens de chauffe lorsque la cuve (1) est soit absente, soit présente dans le bâti avec un poids inférieur au poids minimum préétabli.

10. Appareil selon l'une des revendications 1 à 9 caractérisé en ce que la cuve (1) présente un bord périphérique roulé (1a) dans sa partie supérieure lui permettant d'agir sur les moyens de détection (30).

11. Appareil selon l'une des revendications 2 à 7 caractérisé en ce que le couvercle (3) est amovible de manière à réaliser un appareil de cuisson à l'air libre.

12. Appareil selon l'une des revendications 1 à 11 caractérisé en ce qu'il est constitué par une friteuse.

## Claims

1. A cooking appliance comprising a frame (2) in which there are integrated a vessel (1), intended for cooking foodstuffs, heater means in thermal relationship with the vessel (1), detector means (30), capable firstly of detecting if the vessel (1) is substantially empty and in that case switching off the power supply circuit of the heater means, and secondly of detecting if the vessel (1) is full enough to reach a pre-established minimum weight, in order, in that case, to switch on the power supply circuit of the heater means, the appliance being characterized in that the vessel (1) is removable, and in that the detector means (30) comprise a first actuating member (10; 43) which is actuated by the vessel (1) when said vessel is in place in the frame (2), and a second actuating member (20; 42) which is actuated by the lid (3) of the appliance when the lid (3) is closed on the vessel (1), said second actuating member (20; 42) being capable of acting so as to inhibit the action of the first actuating member (10; 43) when the vessel (1) is not in place in the frame (2) or when the vessel (1) has not reached the predetermined minimum weight.

2. An appliance according to claim 1, in which the detector means (30) comprise a rocker (32) which moves between a return position in contact with the transmission member (10) and at least one working position in which said rocker (32), when actuated by the actuating member (10), bears on a button (35) on a switch (36) for the power supply circuit of the heater means.

3. An appliance according to claim 2, in which the rocker (32) is a mechanical part presenting firstly a guide channel (32b) having a fixed axis (33) passing therethrough, and secondly two bearing arms (32d, 32c) on either side of the axis (33) facing the respective actuating members (20, 10) so as to be actuated by the actuating members (20, 10).

4. An appliance according to claim 3, in which the rocker (32) is driven in translation under guidance from the guide channel (32b) when the second actuating member (20) is actuated, and in which the rocker (32) is driven in rotation about the axis (33) so as to bear on the button (35) which controls the switching on and off of the power supply circuit of the heater means when the first actuating member (10) is actuated.

5. An appliance according to any one of claims 2 to 4, in which the rocker (32) is held in its return position by means of a return member (34) when none of the actuating members (10, 20) is actuated.

6. An appliance according to any preceding claim, in which the detector means (30) are housed, at least in part, in a housing (31) which is secured to the frame (2) so that the ends of the actuating members (10, 20) project outside the housing (31) in order to come into contact respectively with the vessel (1) and the lid (3).

7. An appliance according to claim 1, in which the detector means (30) comprise a carriage (42) associated with a return spring (32e), said carriage (42) being firstly displaced at least in translation by the lid (3) of the appliance as soon as said lid (3) bears on the carriage (42) in order to prevent contact means from powering the heater means when the vessel (1) is absent or when the vessel (1) has reached a weight which is less than the pre-established minimum weight.

8. An appliance according to claim 7, characterized in that the contact means comprises a thrust part (43) rotably mounted on the carriage (42) and actuated by the vessel (1) when said vessel (1) is present in the frame (2) and has reached the pre-established minimum weight.

9. An appliance according to claim 8, characterized in that the thrust part (43) is associated with a calibration spring (50) fixed on a wall (43a) of the bearing element (41) and on the housing (31) containing the detector means (30), so as to bring the thrust part (43) into a position opening the switch (36) of the power supply circuit of the heater means when the vessel (1) is either absent, or is present in the frame, but with a weight which is less than the pre-established minimum weight.

10. An appliance according to any one of claims 1 to 9, characterized in that the vessel (1) presents a rolled peripheral edge (1a) in its upper portion, thereby enabling it to act on the detector means (30).

11. An appliance according to any one of claims 2 to 7, characterized in that the lid (3) is removable so as to produce an un-covered cooking appliance.

12. An appliance according to any one of claims 1 to 11, characterized in that it is constituted by a deep fat fryer.

## Patentansprüche

1. Kochgerät mit einem Gestell (2), in welches eine Wanne (1) zum Kochen von Lebensmitteln, thermisch mit der Wanne (1) verbundene Heizmittel und Erfassungsmittel (30) integriert sind, die ermöglichen, einerseits zu erfassen, ob die Wanne (1) im wesentlichen leer ist, und gegebenenfalls den Speisestromkreis der Heizmittel zu öffnen, und andererseits zu erfassen, ob die Wanne (1) so gefüllt ist, daß ein vorbestimmtes Mindestgewicht erreicht ist, um in diesem Fall den Speisestromkreis der Heizmittel zu schließen, dadurch gekennzeichnet, daß die Wanne (1) abnehmbar ist und daß die Erfassungsmittel (30) ein erstes Betätigungsorgan (10; 43) enthalten, das von der Wanne (1) betätigt wird, wenn diese im Gestell (2) eingesetzt ist, und ein zweites Betätigungsorgan (20; 42), das vom Deckel (3) des Geräts betätigt wird, wenn der Deckel (3) die Wanne (1) verschließt, wobei das zweite Betätigungsorgan (20; 42) so wirken kann, daß die Wirkung des ersten Betätigungsorgans (10; 43) aufgehoben wird, wenn die Wanne (1) nicht im Gestell (2) eingesetzt ist oder wenn die Wanne (1) ihr vorbestimmtes Mindestgewicht nicht erreicht hat.

2. Gerät nach Anspruch 1, in welchem die Erfassungsmittel (30) ein Kippelement (32) enthalten, das zwischen einer zurückgesetzten Stellung in Anlage an dem Übertragungsglied (10) und mindestens einer Arbeitstellung beweglich ist, in welcher das vom Betätigungsorgan (10) betätigte Kippelement auf einen Knopf (35) eines Schalters (36) des Speisestromkreises der Heizmittel drückt.

3. Gerät nach Anspruch 2, in welchem das Kippelement (32) ein mechanisches Teil ist, das einerseits eine von einer feststehenden Achse (33) durchdrungene Führungsnut (32b) und andererseits zwei Stützarme (32d, 32c) aufweist, die so um die Achse (33) verteilt sind, daß sie gegenüber dem jeweiligen Betätigungsorgan (20, 10) zu liegen kommen, damit sie von den Betätigungsorganen (20; 10) betätigt werden.

4. Gerät nach Anspruch 3, in welchem das Kippelement (32) in eine von der Führungsnut (32b) geführte translatorische Bewegung versetzt wird, wenn das zweite Betätigungsorgan (20) betätigt wird, wobei das Kippelement (32) in eine Drehbewegung um die Achse (33) versetzt wird, um auf den Knopf (35) zu drücken, der das Öffnen und das Schließen des Speisestromkreises der Heizmittel steuert, wenn das erste Betätigungsorgan (10) betätigt wird.

5. Gerät nach einem der Ansprüche 2 bis 4, in welchem das Kippelement (32) in seiner zurückgesetzten Stellung durch ein Rücksetzorgan (34) gehalten wird, wenn keines der Betätigungsorgane (10, 20) betätigt wird.

6. Gerät nach einem der vorangehenden Ansprüche, in welchem die Erfassungsmittel (30) mindestens teilweise in einem mit dem Gestell (2) fest verbundenen Gehäuse untergebracht sind, so daß Enden der Betätigungsorgane (10, 20) aus dem Gehäuse (31) herausragen, um mit der Wanne (1) bzw. dem Deckel (3) in Berührung zu kommen.

7. Gerät nach Anspruch 1, in welchem die Erfassungsmittel (30) einen einer Rücksetzfeder (32e) zugeordneten Schlitten (42) enthalten, der einerseits mindestens translatorisch vom Deckel (3) des Geräts verstellt wird, sobald der Deckel (3) auf den Schlitten (42) drückt, um ein Kontaktmittel daran zu hindern, die Heizmittel zu speisen, wenn die Wanne (1) fehlt oder ein Gewicht unterhalb des vorbestimmten Mindestgewichts erreicht hat.

8. Gerät nach Anspruch 7, dadurch gekennzeichnet, daß das Kontaktmittel ein auf dem Schlitten (42) drehbeweglich angebrachtes Stützteil (43) enthält, das von der Wanne (1) betätigt wird, wenn die Wanne (1) im Gestell (2) vorhanden ist und das vorbestimmte Mindestgewicht erreicht hat.

9. Gerät nach Anspruch 8, dadurch gekennzeichnet, daß das Stützteil (43) einer Tarierfeder (50) zugeordnet ist, die so an einer Wand (43a) des Stützelements (41) und am Gehäuse (31) befestigt ist, das die Erfassungsmittel (30) enthält, daß das Stützteil (43) in eine Stellung zurückgesetzt wird, in welcher der Schalter (36) des Speisestromkreises der Heizmittel geöffnet wird, wenn die Wanne (1) entweder fehlt oder im Gestell vorhanden ist mit einem Gewicht, das unter dem vorbestimmten Mindestgewicht liegt.

10. Gerät nach einem der Ansprüche 1 bis 9, dadurch gekennzeichnet, daß die Wanne (1) einen in seinem oberen Teil rundgebogenen Umfangsrand (1a) aufweist, der ihr ermöglicht, auf die Erfassungsmittel (30) einzuwirken.

11. Gerät nach einem der Ansprüche 2 bis 7, dadurch gekennzeichnet, daß der Deckel (3) abnehmbar ist, so daß ein offenes Kochgerät geschaffen wird.

12. Gerät nach einem der Ansprüche 1 bis 11, dadurch gekennzeichnet, daß es aus einer Friteuse besteht.
